# EUROPÄISCHE PATENTSCHRIFT

(11) **EP 3 207 785 B1**
(45) Veröffentlichungstag und Bekanntmachung des Hinweises auf die Patenterteilung: **11.09.2019**
(21) Anmeldenummer: 17401013.2
(22) Anmeldetag: 09.02.2017
(51) Int. Cl.: A01C 5/06, A01C 7/20

(54) **SÄSCHAR**
SEED DRILL COULTER
SOC DE SEMOIR

(30) Priorität: 19.02.2016 DE 102016102909
(43) Veröffentlichungstag der Anmeldung: 23.08.2017
(73) Patentinhaber: Amazonen-Werke H. Dreyer GmbH & Co. KG, 49205 Hasbergen (DE)
(72) Erfinder: Wilken, Martin, 26123 Oldenburg (DE); Hüer, Berthold, 49740 Haselünne (DE); Tanke, Christian, 01723 Kesselsdorf (DE)

(56) Entgegenhaltungen:
- EP-A1- 2 974 585
- EP-B1- 1 338 187
- WO-A2-2007/024624
- US-A1- 2008 011 209

## Beschreibung

Die Erfindung betrifft ein Säschar gemäß des Oberbegriffes des Patentanspruches 1.

Ein derartiges Säschar ist in der EP 2 974 585 A1 beschrieben. Bei diesen Säschar ist das Endstück der Saatgutleitung mittels zweier Steckelemente zwischen den beiden Scheiben angeordnet und in der Ausbringposition mittels eines zusätzlichen Sicherungselementes an dem Scharhalter gesichert. Nach dem Lösen des Sicherungselementes kann das Endstück der Saatgutleitung nach hinten aus dem Säschar herausgezogen werden. Die Steckelemente sind als Rundebolzenstücke ausgebildet und stellen keine genaue, insbesondere keine verschwenkungsfreie Führung für das Einsetzen des Endstückes in die Aussparung an dem Säschar dar.

Ein weiteres Säschar ist in EP 1 338 187 B1 beschrieben. Bei diesen Säschar ist das Endstück der Saatgutleitung so zwischen den beiden Scheiben angeordnet, dass es nach dem Lösen des oberen Festsetzelementes um das untere Festsetzelement nach hinten schwenken kann. An dem unteren Ende des Endstückes sind Hakenelemente angeordnet, welche hinter Bolzen einhakend eingesetzt werden müssen. Anschließend wird durch nach vorn Schwenken des Endstückes das Endstück der Saatleitung soweit an den Halter des Schares herangeschwenkt, dass die oberen Bohrungen der Halterung zur Deckung gebracht werden, damit ein Sicherungsstift hindurchgesteckt werden kann. Aufgrund der Verschwenkmöglichkeit muss ein ausreichendes Spiel zumindest im Bereich des unteren Festsetzelementes vorhanden sein.

Der Erfindung liegt die Aufgabe zu Grunde, die Festlegung des Endstückes durch die Ausgestaltung des unteren Festsetzelementes zu verbessern.

Diese Aufgabe wird erfindungsgemäß durch die Merkmale des Anspruchs 1 gelöst.

Infolge dieser Maßnahme wird eine formschlüssige Ausgestaltung des unteren Festsetzelementes zur exakten und definierten Ausrichtung des Endstückes der Saatleitung gegenüber dem Scheibenträger erreicht.

Um in einfacher Weise eine Verdrehsicherung zu gewährleisten, ist vorgesehen, dass das Steckelement in seiner Grundausgestaltung im Querschnitt quadratisch oder rechteckig ausgebildet ist. Durch diese Maßnahme lässt sich das Steckelement im Bereich, in dem es als Verdrehsicherung dient, einfach gestalten. Zusätzlich kann auf der in Montagerichtung vorderen Seite an dem Steckelement eine Abrundung oder keilförmiger Ansatz zur besseren Einführung des Steckelementes in die an dem Scharträger angeordnete Aussparung angeordnet sein.

Besonders vorteilhaft lässt sich erfindungsgemäß die Verdrehsicherung dadurch verwirklichen, dass zwei gegenüberliegende Seitenflächen des im Querschnitt quadratisch oder rechteckig ausgebildeten Steckelementes an zwei gegenüberliegenden Seitenflächen der Aussparung flächig aneinander liegen.

Damit das Steckelement als Verdrehsicherung in einfacher Weise das untere Festsetzelementes bei einfacher Montagemöglichkeit bilden kann, ist vorgesehen, dass das Steckelement in der Aussparung in Art einer Schiebeführung in Längsrichtung der Aussparung verschiebbar ist.

Eine einfache Ausgestaltung und Anordnung der Steckelementes für das untere Festsetzelementes lässt sich dadurch umsetzen, dass die Steckverbindung zwei beabstandet zueinander angeordnete und den Scharträger beidseitig einfassende und das Endstück in einer weiteren Ebene zum Scharträger fixierende Laschen aufweist, wobei der in diesem aufrecht verlaufenden Bereich des Scharträgers zumindest eine auf der dem Endstück benachbarten Seite angeordnete und zu dem Endstück offene Aussparung angeordnet ist, wobei diese Aussparung sich auf Höhe der an dem Endstück angebrachten Laschen befindet, dass zwischen den Laschen ein in die Aussparung eingreifendes Steckelement angeordnet ist, wobei die Laschen die Aussparung übergreifen.

Eine einfache Demontage des Endstückes von dem Scharträger lässt sich dadurch verwirklichen, dass die zumindest beiden Verbindungselemente zur Anordnung des Endstückes am Scharträger derart ausgestaltet sind, dass das Endstück ohne Demontage einer der Scheiben nach hinten aus dem Zwischenraum zwischen den Scheiben herausziehbar ausgestaltet ist.

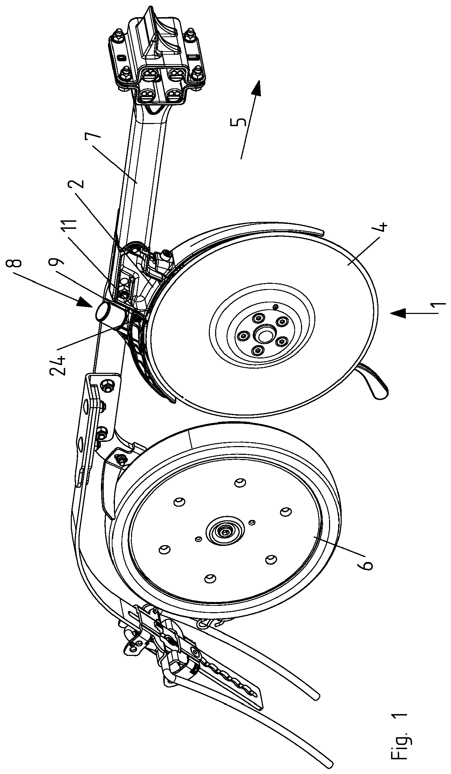

Weitere Einzelheiten der Erfindung sind der Beispielsbeschreibung und den Zeichnungen zu entnehmen. Die Zeichnungen zeigen
- Fig.1: ein erfindungsgemäßes Säschar in perspektivischer Darstellung,

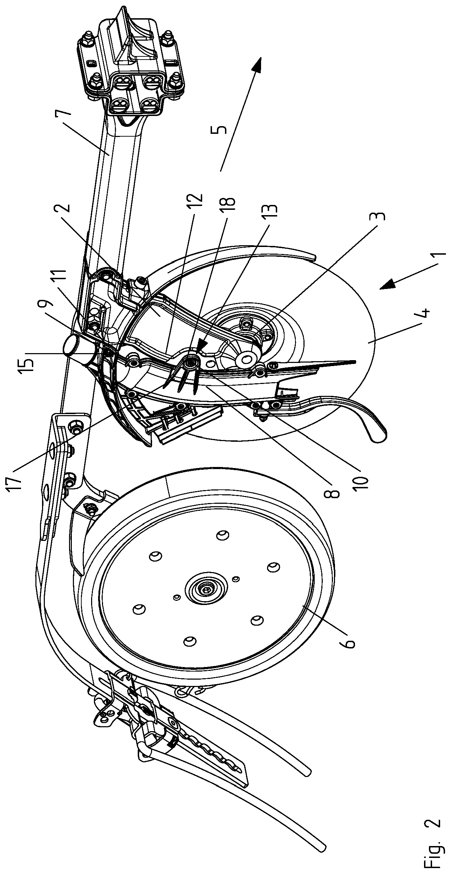

- Fig.2: das Säschar nach Fig.1 in gleicher Darstellungsweise, jedoch mit abgenommener rechter Scharscheibe des Doppelscheibenschares und mit in Betriebsstellung montiertem Endstück der Zuleitung,
- Fig.3: das Säschar mit in Betriebsstellung montiertem Endstück der Zuleitung in Seitenansicht nach Fig.2,
- Fig.4: das Säschar in der Darstellungsweise nach Fig.2, jedoch mit ausgeblendeter rechter Lasche des unteren Festsetzelementes,
- Fig.5: das untere Festsetzelement des in Betriebsstellung montierten Endstückes der Zuleitung in der Darstellungsweise nach Fig.4, jedoch in ausschnittsweiser Darstellung und vergrößertem Maßstab,
- Fig.6: das Säschar mit nach hinten herausgezogenem Endstück in Zwischenstellung in perspektivischer Darstellung,
- Fig.7: das untere Festsetzelement des nach hinten herausgezogenen Endstückes in Zwischenstellung in der Darstellungsweise nach Fig.6, jedoch in ausschnittsweiser Darstellung und vergrößertem Maßstab,
- Fig.8: das untere Festsetzelement des hinten herausgezogenen Endstückes in der Darstellungsweise nach Fig.7,
- Fig.9: das Säschar mit nach hinten und oben herausgezogenem Endstück in perspektivischer Darstellung.

Das Säschar 1 ist als Doppelscheibenschar ausgestaltet und weist einen Scharträger 2, an dem mittels entsprechender Lagerungen 3 zwei Scharscheiben 4 frei drehbar und schräg zur Fahrtrichtung 5 und entgegengesetzt V-förmig zueinander angestellt angeordnet sind. Hinter den beiden Scheiben 4 ist beabstandet zu den Scheiben 4 eine Tiefenführungs- und Saatgutandruckrolle 6 angeordnet. Die Anordnung dieser Rolle 6 ist optional, das Säschar 1 kann auch ohne diese Rolle 6 eingesetzt werden. Das Säschar 1 mit dem Scharträger 2 sind über Scharhaltearme 7 an nicht dargestellten, quer zur Fahrtrichtung 5 verlaufenden Querbalken einer Sämaschine in bekannter Weise angeordnet. Dem Säschar 1 ist das Endstück 8 zumindest einer Saatgut- und/oder Düngerzuleitung zugeordnet. Dieses Endstück 8 ist über im Folgenden noch näher beschriebenen Verbindungselementen 9 und 10 an dem Scharträger 2 in abnehmbar Weise angeordnet.

Der Scharträger 2 weist einen oberen Befestigungsbereich 11 für das Endstück 8 und einen auf der Rückseite unterhalb des Befestigungsbereiches 11 nach unten in Richtung der Lagerung 3 aufrecht verlaufenden Bereich 12 mit dem unteren Befestigungsbereich 13 auf.

In dem oberen Bereich des Endstückes 8 ist an dem Endstück 8 im Bereich des Befestigungsbereiches 11 des oberen Verbindungselementes 9 das Festsetzelement 14 angeordnet. Über dieses Festsetzelement 14 des Verbindungselementes 9 wird das Endstück 8 im oberen Bereich mit dem Scharträger 2 formschlüssig verbunden. Hierzu weist das Endstück 8 auf der dem Scharträger 2 benachbarten Bereich zwei beabstandet zueinander angeordnete Laschenanordnungen 15 auf, die als Verbindungselemente 9 zu dem Scharträger 2 zur Montage des Endstückes 8 an dem Scharträger 2 ausgestaltet sind.

Auf der Rückseite des aufrecht verlaufenden Bereiches 12 des Scharträgers 2 ist unterhalb des oberen Verbindungselementes 9 eine Aussparung 16, die Bestandteil des unteren Verbindungselementes 10 zur Anordnung des Endstückes 8 an dem Scharträger 2 ist. Diese Aussparung 16 ist in dem aufrecht verlaufenden Bereich 12 des Scharträgers 2 auf der dem Endstück 8 benachbarten Seite angeordnet und zu dem Endstück 8 offen ausgestaltet. Passend zu der Anordnung der Aussparung 16 in dem Scharträger 2 sind in entsprechenden Abstand und entsprechender Lage von dem oberen Verbindungselement 9 an dem Endstück 8 die Laschen 17 der Laschenanordnung 18 angeordnet. Jede Lasche 17 dieser Anordnung 15 weist zwei beabstandet zueinander angeordnete Laschen 17 auf, die den Scharträger 2 beidseitig umgreifen. Zwischen den beiden Laschen 17 der Laschenanordnung 18 ist ein in die Aussparung 16 als Steckelement 19 ausgebildetes eingreifendes Zwischenstück 20 angeordnet. Weiterhin übergreifen die Laschen 17 die jeweilige Aussparung 16 wenn das Endstück 8 an dem Scharträger 2 montiert ist.

Somit ist in dem aufrecht verlaufenden Bereich des Scharträgers 2 auf der dem Endstück 8 benachbarten Seite die zu dem Endstück 8 offene Aussparung 16 angeordnet. Diese Aussparung 16 befindet sich nach der Montage auf Höhe des an dem Endstück 8 angebrachten Steckelementes 19, so dass das Steckelement 19 in die Aussparung 16 eingreifen kann. Das Steckelement 19 greift formschlüssig in die Aussparung 16 ein und ist gegenüber der Aussparung 16 verdrehsicher ausgestaltet. Hierzu ist das Steckelement 19 in seiner Grundausgestaltung im Querschnitt quadratisch oder rechteckig ausgebildet, wie die Zeichnungen zeigen. Zusätzlich kann auf der vorderen, freien Seite des Steckelementes 19 eine gerundete Fortsetzung 21 vorhanden sein.

Zur Schaffung der Verdrehsicherung des Endstückes 8 nach dem Einführen des Steckelementes 19 in die Aussparung 16 weist das Steckelement 19 zwei gegenüberliegende Seitenflächen 22 auf. Weiterhin ist das Steckelement 19 im Querschnitt quadratisch oder rechteckig ausgebildet. Die beiden gegenüberliegenden Seitenflächen 22 des Steckelementes 19 liegen nach dem Einführen des Steckelementes 19 in die Aussparung 16 an zwei gegenüberliegenden Seitenflächen 23 der Aussparung 16 flächig aneinander an.

Zur Montage und Demontage ist das Steckelement 19 in der Aussparung 16 in Art einer Schiebeführung in Längsrichtung der Aussparung in verdrehsicherer Weise verschiebbar.

Zur Ausgestaltung des als unteren Festsetzelementes ausgebildeten Verbindungselementes 10 zur Schaffung der Steckverbindung, weist dieses zwei beabstandet zueinander angeordnete und den Scharträger 2 beidseitig einfassende und das Endstück 8 in einer weiteren Ebene zum Scharträger fixierende Laschen 17 auf. Zwischen den Laschen 17 ist ein in die Aussparung 16 eingreifendes Steckelement 19 angeordnet. Die zum Endstück 8 offene Aussparung 16 in dem Scharträger 2 befindet sich auf Höhe der an dem Endstück 8 angebrachten Laschen 17 bei an dem Scharträger 2 montiertem Endstück 8. Wenn das Endstück an dem Scharträger 2 montiert ist, übergreifen die Laschen 17 die Aussparung 16 in dem Scharträger 2.

Die beiden Verbindungselemente 9 und 10 zur Anordnung des Endstückes 8 am Scharträger 2 sind derart ausgestaltet sind, dass das Endstück 8 ohne Demontage einer der Scheiben 4 nach hinten aus dem Zwischenraum zwischen den Scheiben 4 des Doppelscheibenschares 1 herausziehbar ausgestaltet ist.

Die Laschenverbindung 15 ist in Verbindung mit der Aussparung 16 als formschlüssige Steckverbindung ausgebildet und fasst in verdrehsicherer Weise mit der Zwischenverbindung in die Aussparung 16, wobei die Laschen 17 beidseitig die jeweilige Aussparung 16 übergreifen, so dass hierdurch das Endstück 8 zusätzlich in der weiteren Ebene zum Scharträger 2, nämlich quer zur Fahrtrichtung 5 fixiert ist. Durch die Ausrichtung und Ausgestaltung der Aussparung 16 und des Steckelementes 19 wird in verdrehsicherer Weise ein geradliniges Verschieben des Endstückes 8 bei der Montage und Demontage des Endstückes 8 gegenüber dem Scharträger 2 sichergestellt.

Durch die Ausgestaltung des Verbindungselementes 10 als vorbeschriebene verdrehsichere Steckverbindung lässt sich das Endstück 8 nach Lösen des nicht dargestellten Sicherungselementes, welches als Schraubenelement 24 ausgebildet, ohne Demontage einer Scheibe 4 des Schares 1 nach hinten aus dem Zwischenraum zwischen den Scheiben 4 heraus ziehen. Somit sind die Verbindungselemente 9 und 10 zur Anordnung des Endstückes 8 am Scharträger 2 derart ausgestaltet, dass das Endstück 8 ohne Demontage einer der Scheiben 4 nach hinten aus dem Zwischenraum zwischen den Scheiben 4 herausziehbar ausgestaltet ist. Hierbei ist die Ausgestaltung auch so gestaltet, dass bei einer optional hinter den Scharscheiben angeordneten Rolle 6 das Endstück 8 auch dann montiert und demontiert werden kann.

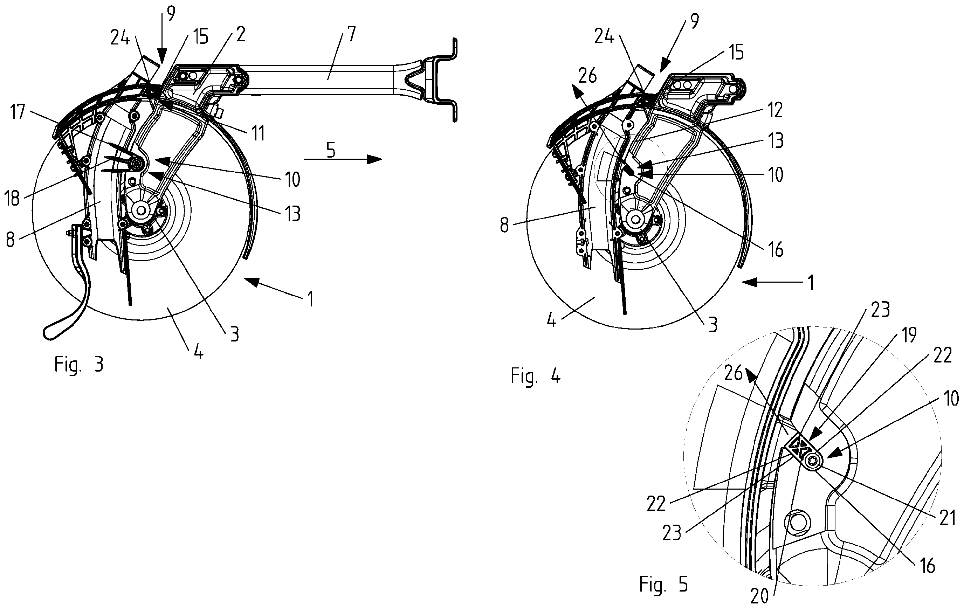

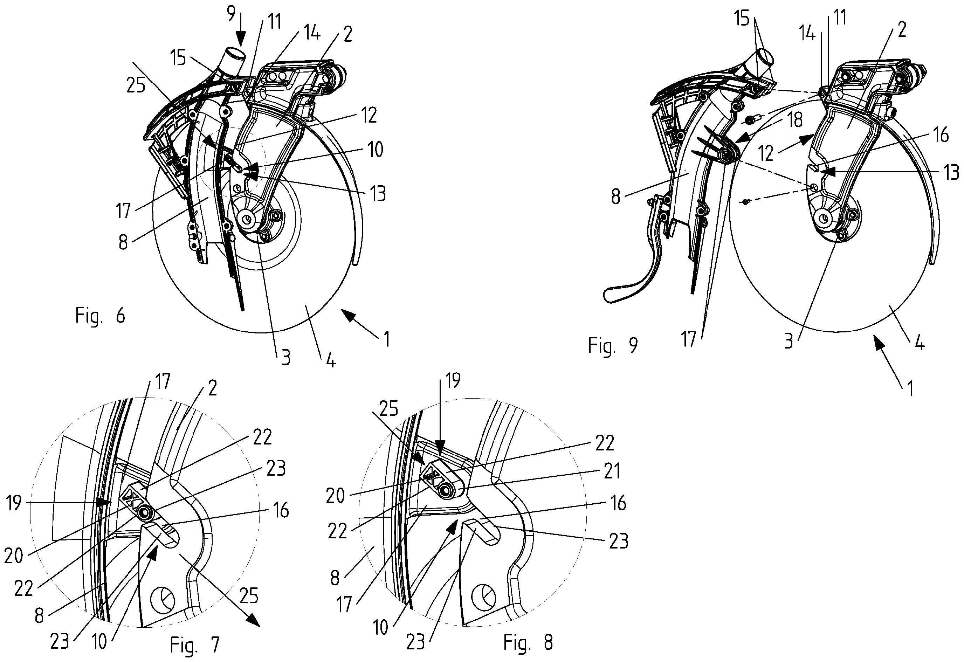

Die Montage des Endstückes 8 an dem Scharträger 2 zwischen den beiden Scharscheiben 4, ohne deren Demontage geschieht in folgender Weise:
Das Endstück 8 wird über die in den Fig.6 und 8 dargestellten Positionen in die in Fig.3 bis 5 dargestellte Endmontageposition verbracht. Hierzu wird zunächst das Steckelelement 19 in den Beginn der Aussparung 16 eingebracht. Dann wird das Endstück 8 in Pfeilrichtung 25 aufgrund der verdrehsicheren Ausgestaltung der Schiebeführung in der Aussparung 16 geradlinig in den Bereich zwischen die Scharscheiben 4 geschoben und dann nach vorn in Richtung der Scharträgers 2 in Pfeilrichtung 25 bewegt, so dass das Zwischenstück 20 zwischen den Laschen 17 in die Aussparung 16 eingreift und die Laschen 17 die Aussparung 16 übergreifen, wie Fig.6 zeigt, bis das Endstück 8 an den aufrecht verlaufenden Bereich 12 des Scharträgers 2 zur Anlage kommt und andererseits der obere Bereich des an dem Endstück 8 angeordneten Fixierungselementes 14 und das U-förmig ausgestaltete Befestigungselement das als Schraube 24 ausgebildete Sicherungselement umgreift und dort mit der zugeordneten Mutter auf der Schraube 24 festgesetzt wird.

Die Montage des Endstückes 8 an dem Scharträger 2 zwischen den beiden Scharscheiben 4, ohne deren Demontage geschieht in umgekehrter Weise: Zunächst wird die Mutter des Sicherungselementes24 gelöst. Anschließend kann das Endstück 8 nach hinten aus dem Zwischenraum zwischen den Scheiben 4 in Pfeilrichtung 26 herausgezogen und anschließend weiter nach oben bewegt werden.

## Patentansprüche

1. Säschar (1) mit einem Scharträger (2), an dem zwei schräg zur Fahrtrichtung (5) und entgegengesetzt V-förmig zueinander angestellte Scheiben (4), zwischen denen das Endstück (8) zumindest einer Saatgut- und/oder Düngerzuleitung ausmündend, angeordnet sind, wobei das Endstück (8) abnehmbar an dem Scharträger (2) mithilfe eines ersten, ein Festsetzelement aufweisenden Verbindungselementes (9) und zumindest eines zweiten als Steckverbindung ausgebildeten Verbindungselementes (10) an dem Scharträger (2) angeordnet ist, wobei das Endstück (8) der Saatgut- und/oder Düngerzuleitung ohne die Demontage einer der Scheiben (4) zu erfordern abnehmbar ist, wobei der Scharträger (2) einen aufrecht verlaufenden Bereich (12), zu dem das Endstück (8) benachbart angeordnet ist, aufweist, wobei die Steckverbindung zumindest ein an dem Endstück (8) angeordnetes Steckelement (19) aufweist, wobei der in diesem aufrecht verlaufenden Bereich (12) des Scharträgers (2) zumindest eine auf der dem Endstück (8) benachbarten Seite angeordnete und zu dem Endstück (8) offene Aussparung (16) angeordnet ist, wobei diese Aussparung (16) sich auf Höhe des an dem Endstück (8) angebrachten Steckelementes (19) befindet, wobei das Steckelement (19) in die Aussparung (16) eingreifend ausgebildet ist, wobei das Steckelement (19) formschlüssig in die Aussparung (16) eingreift und gegenüber der Aussparung (16) verdrehsicher ausgestaltet ist,
**dadurch gekennzeichnet, dass** das Steckelement (19) in seiner Grundausgestaltung im Querschnitt quadratisch oder rechteckig ausgebildet ist,
dass zwei gegenüberliegende Seitenflächen (22) des im Querschnitt quadratisch oder rechteckig ausgebildeten Steckelementes (19) an zwei gegenüberliegenden Seitenflächen (23) der Aussparung (16) flächig aneinander liegen.

2. Säschar nach Anspruch 1, **dadurch gekennzeichnet, dass** das Steckelement (19) in der Aussparung (16) in Art einer Schiebeführung in Längsrichtung (25, 26) der Aussparung (16) verschiebbar ist.

3. Säschar nach zumindest einem der vorstehenden Ansprüche, **dadurch gekennzeichnet, dass** die Steckverbindung zwei beabstandet zueinander angeordnete und den Scharträger (2) beidseitig einfassende und das Endstück (8) in einer weiteren Ebene zum Scharträger (2) fixierende Laschen (17) aufweist, wobei der in diesem aufrecht verlaufenden Bereich (12) des Scharträgers (2) zumindest eine auf der dem Endstück (8) benachbarten Seite angeordnete und zu dem Endstück (8) offene Aussparung (16) angeordnet ist, wobei diese Aussparung (16) sich auf Höhe der an dem Endstück (8) angebrachten Laschen (17) befindet, dass zwischen den Laschen (17) ein in die Aussparung (16) eingreifendes Steckelement (19) angeordnet ist, wobei die Laschen (17) die Aussparung (16) übergreifen.

4. Säschar nach zumindest einem der vorstehenden Ansprüche, **dadurch gekennzeichnet, dass** die zumindest beiden Verbindungselemente (9, 10) zur Anordnung des Endstückes (8) am Scharträger (2) derart ausgestaltet sind, dass das Endstück (8) ohne Demontage einer der Scheiben (4) nach hinten aus dem Zwischenraum zwischen den Scheiben (4) herausziehbar ausgestaltet ist.

## Claims

1. Sowing coulter (1) having a coulter carrier (2) on which there are arranged two discs (4) which are positioned at an angle to the direction of travel (5) and in opposite directions in a V-shaped manner with respect to one another and between which the end piece (8) of at least one seed and/or fertilizer supply line opens out, wherein the end piece (8) is arranged removably on the coulter carrier (2) with the aid of a first connecting element (9), having a fixing element, and at least one second connecting element (10), in the form of a plug connection, on the coulter carrier (2), wherein the end piece (8) of the seed and/or fertilizer supply line is removable without it being necessary to take off one of the discs (4), wherein the coulter carrier (2) has an upright region (12) adjacent to which the end piece (8) is arranged, wherein the plug connection has at least one plug element (19) arranged on the end piece (8), wherein at least one cutout (16) that is open towards the end piece (8) and is arranged on the side adjacent to the end piece (8) is arranged in this upright region (12) of the coulter carrier (2), wherein this cutout (16) is located at the level of a plug element (19) attached to the end piece (8), wherein the plug element (19) is configured to engage in the cutout (16), wherein the plug element (19) engages in the cutout (16) in a form-fitting manner and is configured to be unable to rotate with respect to the cutout (16),
**characterized in that** the plug element (19) is formed with a square or rectangular cross section in its basic configuration,
**in that** two opposite side faces (22) of the plug element (19) formed with a square or rectangular cross section bear in a planar manner against two opposite side faces (23) of the cutout (16).

2. Sowing coulter according to Claim 1, **characterized in that** the plug element (19) is displaceable in the cutout (16) in the manner of a sliding guide in the longitudinal direction (25, 26) of the cutout (16).

3. Sowing coulter according to at least one of the preceding claims, **characterized in that** the plug connection has two lugs (17) that are arranged in a manner spaced apart from one another, surround the coulter carrier (2) on both sides and fix the end piece (8) in a further plane with respect to the coulter carrier (2), wherein at least one cutout (16) that is open towards the end piece (8) and is arranged on the side adjacent to the end piece (8) is arranged in this upright region (12) of the coulter carrier (2), wherein this cutout (16) is located at the level of the lugs (17) attached to the end piece (8), **in that** a plug element (19) that engages in the cutout (16) is arranged between the lugs (17), wherein the lugs (17) overlap the cutout (16).

4. Sowing coulter according to at least one of the preceding claims, **characterized in that** the at least two connecting elements (9, 10) for arranging the end piece (8) on the coulter carrier (2) are configured such that the end piece (8) is configured to be removable rearwardly from the intermediate space between the discs (4) without one of the discs (4) being taken off.

## Revendications

1. Soc de semoir (1) avec un porte-soc (2), sur lequel sont disposés deux disques (4) montés en oblique par rapport à la direction de marche (5) et opposés l'un à l'autre en forme de V, entre lesquels débouche la pièce terminale (8) d'une conduite d'amenée de semences et/ou d'engrais, dans lequel la pièce terminale (8) est disposée de façon amovible sur le porte-soc (2) à l'aide d'un premier élément d'assemblage (9) présentant un élément de fixation et d'au moins un deuxième élément d'assemblage (10) sous forme d'assemblage à embrocher sur le porte-soc (2), dans lequel la pièce terminale (8) de la conduite d'amenée de semences et/ou d'engrais est amovible sans nécessiter le démontage d'un des disques (4), dans lequel le porte-soc (2) présente une région s'étendant en position debout (12), à proximité de laquelle la pièce terminale (8) est disposée, dans lequel l'assemblage à embrocher présente au moins un élément à embrocher (19) disposé sur la pièce terminale (8), dans lequel ladite au moins une découpe (16) disposée sur le côté proche de la pièce terminale (8) et ouverte vers la pièce terminale (8) est disposée dans cette région (12) s'étendant en position debout du porte-soc (2), dans lequel cette découpe (16) se trouve à hauteur de l'élément à embrocher (19) monté sur la pièce terminale (8), dans lequel l'élément à embrocher (19) est conçu pour s'engager dans la découpe (16), dans lequel l'élément à embrocher (19) s'engage par emboîtement dans la découpe (16) et est réalisé de façon calée en rotation par rapport à la découpe (16),
**caractérisé en ce que** l'élément à embrocher (19) est réalisé avec une section transversale de forme carrée ou rectangulaire dans sa configuration de base, **en ce que** deux faces latérales opposées (22) de l'élément à embrocher (19) de forme carrée ou rectangulaire en section transversale s'appliquent à plat l'une sur l'autre sur deux faces latérales opposées (23) de la découpe (16).

2. Soc de semoir selon la revendication 1, **caractérisé en ce que** l'élément à embrocher (19) est déplaçable dans la découpe (16) à la manière d'un guidage glissant en direction longitudinale (25, 26) de la découpe (16).

3. Soc de semoir selon au moins une des revendications précédentes, **caractérisé en ce que** l'assemblage à embrocher présente deux pattes (17) disposées à distance l'une de l'autre et encadrant de part et d'autre le porte-soc (2) et fixant la pièce terminale (8) au porte-soc (2) dans un autre plan, dans lequel ladite au moins une découpe (16) disposée sur le côté proche de la pièce terminale (8) et ouverte vers la pièce terminale (8) est disposée dans la région (12) du porte-soc (2) s'étendant en position debout, dans lequel cette découpe (16) se trouve à hauteur des pattes (17) montées sur la pièce terminale (8), **en ce qu'**un élément à embrocher (19) s'engageant dans la découpe (16) est disposé entre les pattes (17), dans lequel les pattes (17) recouvrent la découpe (16).

4. Soc de semoir selon au moins une des revendications précédentes, **caractérisé en ce que** lesdits au moins deux éléments d'assemblage (9, 10) sont configurés pour l'agencement de la pièce terminale (8) sur le porte-soc (2), de telle manière que la pièce terminale (8) puisse être extraite vers l'arrière hors de l'espace intermédiaire entre les disques (4) sans démontage d'un des disques (4).
